# EUROPEAN PATENT APPLICATION

(11) **EP 1 835 259 A1**
(43) Date of publication of application: **19.09.2007**
(21) Application number: 05709237.1
(22) Date of filing: 07.01.2005
(51) Int. Cl.: G01C 21/00

(54) **NAVIGATION SYSTEM AND PORTABLE TERMINAL**

(71) Applicant: Navitime Japan Co., Ltd., Tokyo 101-0041 (JP)
(72) Inventor: YAMAZAKI, Hiroshi, c/o Navitime Japan Co. Ltd., Tokyo 101-0041 (JP); TASHIRO, Kazuhiro, c/o Navitime Japan Co. Ltd., Tokyo 101-0051 (JP); YOSHIDA, Masakazu, c/o Navitime Japan Co. Ltd., Tokyo 101-0051 (JP)
(74) Representative: HOFFMANN EITLE
(86) International application number: PCT/JP2005/000150
(87) International publication number: WO 2006/072997

(57) **Abstract**

A navigation system of communication type enabling the user to recognize necessary information instantly without watching the display screen and a portable terminal are provided. A navigation server 20 creates data on a guidance path including a guidance point on the guidance path and guidance information on the guidance point according to a sought guidance path and sends the data to a portable terminal 30. The portable terminal 30 has a drive operating mode. When the portable terminal 30 operates in the drive mode, distance calculating means 36 calculates the distance from the current position to the next guidance point from the current position detected by current position detecting means 35 and the guidance path data sent from the navigation server 20, image creating means 37 creates a background image and a guidance image displayed on display means, and creates and displays an image where the display color of the background image varies depending on the distance calculated by the distance calculating means 36.

## Description

### TECHNICAL FIELD

The present invention relates to a navigation system in which a route search is requested from a navigation server using a portable terminal such as a portable telephone or the like, and data concerning guidance routes and guidance points is received from the navigation server and displayed on the display screen of the portable terminal. More specifically, the present invention relates to a navigation system and portable terminal which are devised so that a display that can easily be visually recognized by the user is displayed on a portable terminal in which there are limitations on the size of the display screen, without displaying detailed maps or guidance routes.

### BACKGROUND ART

In the past, navigation devices and navigation systems have been known which guide the user by searching for and finding routes from a desired starting point to a desired destination using map data and road data. Devices and systems that have been implemented as such navigation devices or navigation systems include car navigation devices which are mounted in automobiles and which provide the driver with route guidance, as well as communications navigation systems which send route guidance requests to a route search server using a portable telephone as a navigation terminal apparatus, and which receive route guidance by receiving the results of these route guidance requests.

In particular, communications navigation systems are systems that utilize a portable terminal such as a portable telephone or the like as a navigation terminal apparatus, and can also be used as navigation systems for pedestrians. In the case of navigation systems for use by pedestrians, it is desirable that a route guidance function including transportation resources be added; there are also navigation systems that store train timetable data in the route search server in addition to pedestrian route searching and guidance, and that have a function that provides guidance regarding the routes (of passenger trains) from desired starting stations to desired destination stations in addition to pedestrian route searching and guidance.

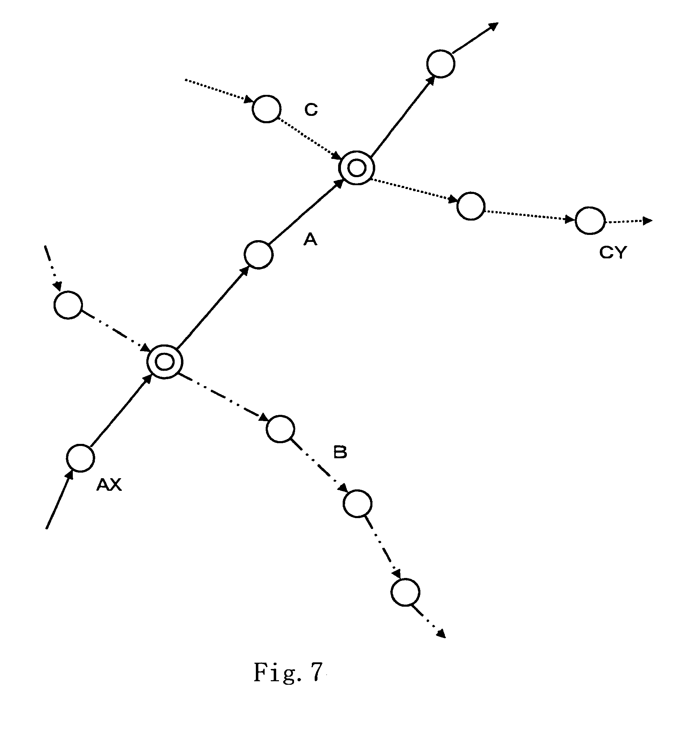

For example, in cases in which the road network used for route searching in a pedestrian navigation system or car navigation system comprises the roads A, B and C as shown in FIG. 7, the endpoints, intersections, flexure points, and the like of the roads A, B and C are taken as nodes, and the roads that connect the respective nodes are displayed as directional links. Furthermore, the road network data comprises node data (latitude and longitude of nodes), link data (link numbers), and link cost data in which the link costs of the respective links (distance of links or time required in order to travel over the links) are taken as data. Specifically, in FIG. 7, single circles or double circles indicate nodes, with double circles indicating the intersections of roads. The directional links that connect the respective nodes are indicated by arrow lines (solid lines, broken lines, and two-dot chain lines). The links include links that indicate the respective directions of the rise and fall of roads. In FIG. 7, however, only links with an arrow orientation are shown in order to simplify the graphic display.

In cases in which a route search is performed using such road network data as a route search data base, the links connecting the node of the starting point and the destination node are traced, the link costs of these links are accumulated, and guidance is provided by seeking and finding a route which is such that the accumulated link costs are minimized. Specifically, in FIG. 7, in a case where a route search is performed with the node AX taken as the starting point and the node CY taken as the destination, guidance is provided in which road A is traveled from the node AX, a right turn is made at the second intersection, thus entering road C, the links that lead to the node CY are successively traced and the link costs accumulated, and a search is made for a route which is such that the accumulated value of the link costs is minimized. In FIG. 7, no other route leading from the node AX to the node CY is shown. In actuality, however, other such routes exist; accordingly, a search is similarly made for other routes that may lead from the node AX to the node CY, and the route showing the lowest link costs among these routes is determined as the optimal route.

Such a road network is a static network in which the link costs are fixed as schematically shown in FIG. 7, and in which the accumulated link costs can be immediately determined once the route is decided. The amount of data is also proportional to the quantity of the road network. A universally known method called the Dykstra method can be used as the method that searches for routes from the starting point to the destination.

The optimal guidance route data searched by the navigation server comprises route data of maps and guidance routes including the current position of the terminal apparatus; guidance point data such as intersection nodes, branching nodes, and the like on the guidance route; guidance relating to the guidance points (guidance of the direction of travel such as straight ahead, right or left turn); and the like. This data is sent to the terminal apparatus. In the terminal apparatus, this guidance route data is received, and guidance routes, guidance points, and guidance at guidance points are displayed together with maps in a display means. Systems are also known in which guidance is output as audio guidance besides being displayed by arrows and the like.

The present applicant has already filed a patent application as Japanese Patent Application No. 2003-369314 regarding the invention of a navigation system in which route guidance data including guidance point data and guidance data is sent to a terminal apparatus together with such maps and guidance routes. In the invention disclosed in Japanese Patent Application No. 2003-369314 (hereafter referred to as "Previous Application 1"), the terminal apparatus comprises search condition transmission means for transmitting route search condition data to a server, search result receiving means for receiving, from the server, route data that is prepared by the server in accordance with the route search conditions, map request information transmission means for transmitting map data transmission request information that requests the transmission of map data to the server, map data receiving means for receiving map data that is transmitted from the server, route image formation means for forming a route image on the basis of a displayable range on an information display screen and route data, and guidance map image formation means for forming a route guidance map image by combining a map image and the route image on the basis of the map data.

The navigation system disclosed in Patent Document 1 (Japanese Laid-Open Patent Application No. 2003-208095) described below is also known. This navigation system is configured so that when a map scroll mode is "off," a control part causes a map image of the area surrounding the current position detected by a GPS receiving part to be displayed on the screen of a display part together with a current position mark using map data stored in a memory part. When the map scroll operation is started by an operating part, the control part switches the map scroll mode "on" and causes a scroll cursor to move over the map image in accordance with the map scroll operation, with the current position at the time of initiation of the map scroll operation taken as the starting position, and without causing any movement of the map image or current position mark. When the scroll cursor reaches the end of the map image, the control part displays on the display part a map image centered on the position of the scroll cursor together with the scroll cursor and current position mark, using the map data stored in the memory part.

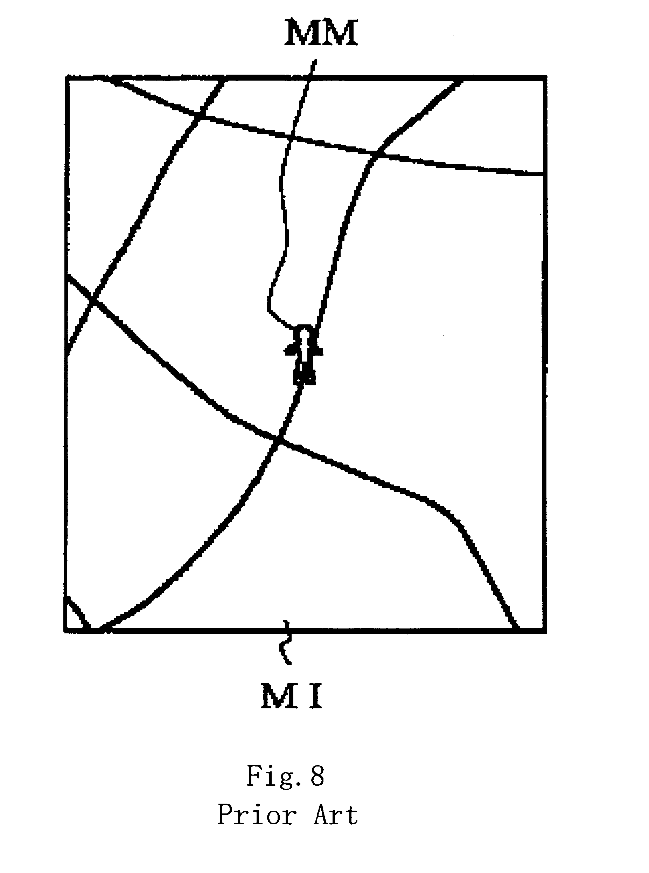

Specifically, in this navigation system, as is shown in FIG. 8, the image displayed on the portable terminal is an image in which a guidance route is displayed on a road map MI, and a current position mark MM indicating the current position of a pedestrian is displayed as a doll-form icon image equipped with an arrow that indicates the direction of travel. Furthermore, in general navigation systems, the current position of the user such as a pedestrian or the like, as well as the distances and left and right turn directions of guidance points such as intersections where a left or right turn is made or the like, may be displayed as characters on the guidance route display screen, or may be output as an audio output.

In communications navigation systems, especially in cases in which the terminal apparatus is a portable terminal such as a portable telephone or the like, the size of the display means is limited; accordingly, the display of maps is small, and the display is difficult for the user to see. Furthermore, in cases in which guidance relating to guidance points is added as a character display, the display is even poorer in terms of visual recognition by the user.

It is difficult to say that such a display method is desirable as a display method for pedestrian or automobile navigation systems; there is a demand for a navigation system using a display method that is superior in terms of visual recognition by the user. For example, the vehicle navigation device disclosed in the following Patent Document 2 (Japanese Patent No. 2698356) is known as a device for improving the visual recognition characteristics for the user.

The vehicle navigation device disclosed in Patent Document 2 has a structure comprising measurement means for measuring the vehicle position, memory means for storing guidance information relating to the remaining distances to intersections and the like as guidance information relating to intersections and the like, and display means for providing guidance notification of intersections or the like where the next turn is to be made by displaying guidance information relating to the remaining distances to intersections or the like, wherein the remaining distance from the position of the vehicle measured by the measurement means to the intersection or the like where the next turn is to be made is determined, read out from the memory means guidance information relating to the remaining distance to intersections or the like, and displayed by the display means. Furthermore, this vehicle navigation device is configured so that a setting is established for the distance at which the display of guidance information relating to the remaining distances to an intersection or the like is switched, and the display of guidance information relating to the remaining distance to the intersection or the like is controllably switched to a display that uses a different display color, on the condition that the remaining distance to the intersection or the like is less than the set distance.

Specifically, in the vehicle navigation device disclosed in Patent Document 2, the attention of the user is attracted by displaying information relating to guidance points, e.g., character displays, display bars, background images of character displays, or the like indicating the remaining distance to an intersection, using a display that is switched to a different color in accordance with the distance from the current position of the vehicle to the guidance point (intersection or the like), or by performing a display using a flashing light.
[Patent Document 1] Japanese Laid-Open Patent Application No. 2003-208095 (FIGS. 1 and 6)
[Patent Document 2] Japanese Patent No. 2698356 (FIGS. 2 and 4)

### DISCLOSURE OF THE INVENTION

### [Problems the Invention Is Intended to Solve]

In cases in which a portable terminal such as a portable telephone or the like is used as the terminal apparatus of a navigation system, as was described above, the screen size of the display means of the terminal apparatus is smaller than that of a vehicle navigation device. Accordingly, the following problem has been encountered. Specifically, in cases in which various conventional display methods for guidance routes and the like are employed, as in the vehicle navigation disclosed in Patent Document 2 or the like, the system has poor visual recognition characteristics for the user.

Specifically, in the display method of the navigation device disclosed in Patent Document 2, provisions are made so that the attention of the user is attracted by varying the color. However, a problem has remained in that it is difficult to say that the visual recognition characteristics of the overall display image, including the display of maps and guidance routes, are improved for the user merely by changing the color of the background or guidance characters relating to guidance points.

However, vehicle navigation systems accurately guide the user to the destination even in unknown territory, and therefore have the merit of reducing the burden on the driver and contributing to smooth traffic. The realization of a navigation system that uses a portable telephone as a terminal apparatus gives many people the opportunity to utilize navigation services. Accordingly, ways to use the system in a safe manner should by all means be studied.

The viewing of mail may be cited as an example of attention being diverted to a portable telephone while driving. Since this involves the reading of documents, such behavior is extremely dangerous. Furthermore, since this is unrelated to the inherent driving operation, such behavior should be avoided. Car navigation systems using portable telephones have also begun to be commercialized. In this case, the display of maps on a portable telephone as in a car navigation system may also divert the attention of the driver. If there is a large display, as in the screen of a vehicle-mounted car navigation system, the visual recognition characteristics are still good, but sufficient visual recognition characteristics cannot be maintained using the screen size of a portable telephone. If maps are displayed on a portable telephone, it is preferable that this portable telephone be used by the passenger in the front passenger seat and that this passenger provide road guidance to the driver.

Such problems also have an effect on the safety of the user, and legal regulations have also been enacted regarding the use of portable telephones during the operation of a vehicle so that the attention of the driver is not diverted to the display screen of a portable telephone or the like during the operation of the vehicle.

The present inventors have conducted various types of research in order to solve the problems described above. As a result of this research, the inventors discovered that the problems described above can be solved by displaying only information relating to guidance points such as intersections, branching locations, or the like where turns are to be made on the guidance route, and that this information should be displayed as image information whose meaning can be understood by the user, without displaying maps. This discovery led to the perfection of the present invention.

Specifically, it is an object of the present invention to solve the problems described above and to provide a communications navigation system and portable terminal which allow the instantaneous recognition of necessary information without diverting the attention of the user to a display screen.

### [Means for Solving the Abovementioned Problems]

In order to solve the problems described above, the invention according to a first aspect provides a navigation system in which a navigation server searches for a route from a starting point to a destination on the basis of route search conditions input from a portable terminal, a guidance route is sent to the portable terminal, and the portable terminal displays the guidance route on display means, wherein
the navigation server comprises guidance data preparation means for preparing, based on the guidance route identified by the search, guidance route data including guidance points on the guidance route and guidance information relating to these guidance points,
the portable terminal can operate at least in a driving mode and has current position detection means, distance calculation means, image formation means, and display means,
the portable terminal, when operating in the driving mode, is devised so that
the distance calculation means calculates the distance from the current position to the next guidance point on the basis of the current position detected by the current position detection means and on the basis of the guidance route data sent from the navigation server,
the image formation means prepares a background image and a guidance image displayed by the display means on the basis of the guidance route data sent from the navigation server, and prepares an image in which the display colors of the background image are made into respectively different display colors in accordance with the distance calculated by the distance calculation means, and
the display means displays the images prepared by the image formation means.

The invention according to a second aspect is the navigation system of the invention according to the first aspect, wherein the portable terminal has another operating mode for displaying maps together with guidance route data, and is provided with mode switching means.

The invention according to a third aspect is the navigation system of the invention according to the second aspect, wherein the mode switching means detects that the portable terminal is mounted on a hands-free kit, and switches to the driving mode.

The invention according to a fourth aspect is the navigation system according to the third aspect, wherein the portable terminal further comprises an acceleration sensor, and the switching means switches to the driving mode in cases in which the portable terminal is mounted on a hands-free kit and there is a variation equal to or greater than a specified value in the acceleration that acts on the portable terminal.

The invention according to a fifth aspect is the navigation system of the invention according to the second aspect, wherein the mode switching means switches to the driving mode in cases in which the portable terminal is out of operation for a specified period of time or longer.

Furthermore, the invention according to a sixth aspect is the navigation system of the invention according to the second aspect, wherein the portable terminal further comprises an inclination sensor, and the switching means switches to the driving mode in cases in which the display screen of the portable terminal is inclined in a substantially vertical direction.

The invention according to a seventh aspect is a portable terminal constituting a navigation system in which a navigation server searches for a route from a starting point to a destination on the basis of route search conditions input from a portable terminal; guidance route data including a guidance route, guidance points on the guidance route, and guidance information relating to these guidance points is sent to the portable terminal; and the portable terminal displays the guidance route on display means, wherein
the portable terminal can operate at least in a driving mode and has current position detection means, distance calculation means, image formation means, and display means,
the portable terminal, when operating in the driving mode, is devised so that
the distance calculation means calculates the distance from the current position to the next guidance point on the basis of the current position detected by the current position detection means and on the basis of the guidance route data sent from the navigation server,
the image formation means prepares a background image and a guidance image displayed by the display means on the basis of the guidance route data sent from the navigation server, and prepares an image in which the display colors of the background image are made into respectively different display colors in accordance with the distance calculated by the distance calculation means, and
the display means displays the images prepared by the image formation means.

The invention according to an eight aspect is the portable terminal of the invention according to the seventh aspect, wherein the portable terminal has another operating mode for displaying maps together with guidance route data, and is provided with mode switching means.

The invention according to a ninth aspect is the portable terminal of the invention according to the eighth aspect, wherein the mode switching means detects that the portable terminal is mounted on a hands-free kit, and switches to the driving mode.

The invention according to a tenth aspect is the portable terminal of the invention according to the ninth aspect, wherein the portable terminal further comprises an acceleration sensor, and the switching means switches to the driving mode in cases in which the portable terminal is mounted on a hands-free kit and there is a variation equal to or greater than a specified value in the acceleration that acts on the portable terminal.

The invention according to an eleventh aspect is the portable terminal of the invention according to the eighth aspect, wherein the mode switching means switches to the driving mode in cases in which the portable terminal is out of operation for a specified period of time or longer.

The invention according to a twelfth aspect is the portable terminal of the invention according to the eight aspect, wherein the portable terminal further comprises an inclination sensor, and the switching means switches to the driving mode in cases in which the display screen of the portable terminal is inclined in a substantially vertical direction.

### [Effect of the Invention]

In the portable terminal of the invention according to the first and seventh aspects, the distance calculation means calculates the distance from the current position to the next guidance point, the image formation means prepares a background image and a guidance image that are displayed by the display means on the basis of route guidance data that is sent from the navigation server, and images in which the display colors of the background images are respectively set as different display colors in accordance with the distance calculated by the distance display means are prepared and displayed by the display means. Since the background images are images that occupy the largest display area in the screen layout of the display means, the user can instantaneously recognize the distance from the current position to the guidance point by the color of the background image displayed on the display screen, and the driver can instantaneously recognize the guidance image with a single glance.

In the invention according to the second and eighth aspects, the portable terminal has another operating mode that displays maps, and is provided with mode switching means. Accordingly, maps can be displayed together with the guidance route in the same manner as in an ordinary navigation system, and the user can grasp the geographical conditions of the guidance route prior to starting. Furthermore, the operating mode that displays these maps is used by the driver in a stopped state prior to starting, and there is no effect on the driving operation even if detailed maps are displayed. Furthermore, in this operating mode, the front seat passenger can also be used as the navigator.

In the invention according to the third through sixth and ninth through twelfth aspects, a structure is used in which automatic switching to the driving mode can be accomplished by various methods using a mode switching means installed in the portable terminal. Accordingly, in cases in which the user receives the navigation service of the portable terminal while driving, the system automatically switches to the driving mode. The system therefore operates in a display mode that displays no maps, and there is no interference with the driving operation. Accordingly, a navigation system and portable terminal that are superior in terms of safety can be provided.

### BEST MODE FOR CARRYING OUT THE INVENTION

Concrete examples of the present invention will be described in detail below with reference to examples and figures. FIG. 1 is a block diagram showing the structure of a navigation system constituting one embodiment of the present invention. FIG. 2 is a screen layout diagram showing the layout of the display screen in the map mode. FIG. 3 is a screen layout diagram showing the layout of the display screen in the navigator mode. FIG. 4 is a screen layout diagram showing the layout of the display screen in the driving mode in which the display method of the present invention is used. FIG. 5 is a flowchart showing the operating procedure of a navigation system constituting an embodiment of the present invention. FIG. 6 is a block diagram showing the structure of a navigation system constituting another embodiment of the present invention.

### [Examples]

The navigation system 10 constituting an embodiment of the present invention comprises a portable terminal 30 and a navigation server 20 that communicate via a network 11 such as the Internet or the like. For example, a portable terminal such as a portable telephone or the like can be used as the portable terminal 30. The user transmits route search conditions such as the starting point, destination, starting time, arrival time, and the like from the portable terminal 30 to the navigation server 20. The navigation server 20 searches for the optimal route from the starting point to the destination in accordance with the route search conditions sent from the portable terminal 30, prepares data relating to the guidance route identified by the search, and transmits this data to the portable terminal 30. As in the Previous Application 1 described above, the guidance route data that is sent to the portable terminal 30 from the navigation server 20 comprises maps that include the current position; route data for the guidance route; guidance point data such as intersection nodes, branching point nodes, and the like on the guidance route; and guidance (guidance regarding the direction of travel such as straight ahead, left or right turn, or the like) relating to the guidance points. The portable terminal 30 receives the guidance route data sent from the navigation server 20, and displays this data on the display screen.

In the map data, eight unit maps, mostly unit maps that include the current position of the portable terminal 30, for a total of 9 unit maps, are sent to the portable terminal 30. When the portable terminal 30 moves and the available unit maps are no longer sufficient, the portable terminal 30 transmits a map transmission request to the navigation server 20 so that unit map data that makes up for the insufficiency is transmitted to the navigation server, in the same manner as in the Previous Application 1.

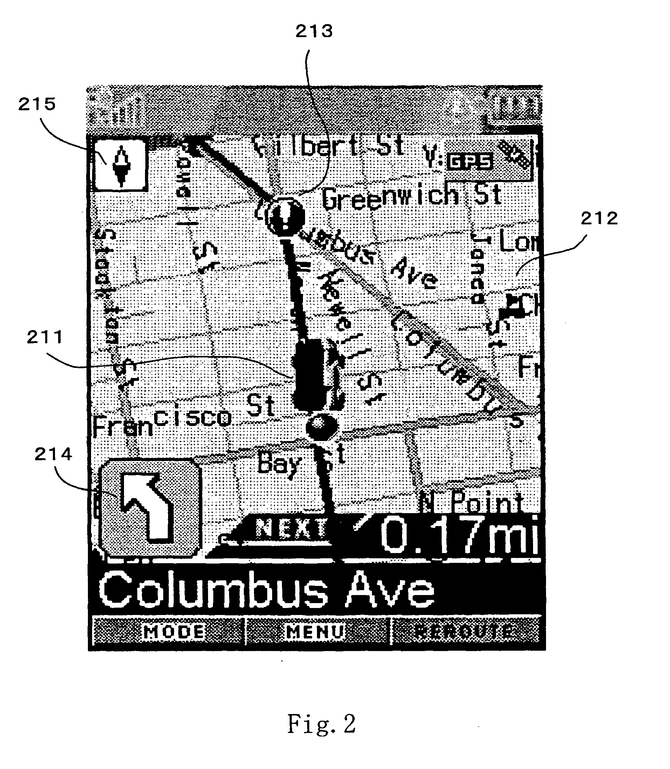

In the present invention, the portable terminal 30 has a plurality of operating modes. Three types of modes, i.e., a map mode, a navigator mode, and a driving mode, are available as operating modes. The map mode, for example, is an operating mode that allows the driver (user) to obtain a geographical grasp of the route from the starting point to the destination on the map at the time of starting. As is shown in FIG. 2, this is a mode in which a relatively large-range map 212 that includes the current position of the portable terminal 30 is displayed. In this operating mode, a guidance point 213, a guidance image 214 which provides guidance at the guidance point, and a geographic direction image 215 which indicates the geographic direction are displayed on the display screen. The guidance image 214 is displayed as a large arrow image which indicates the direction of travel in FIG. 2. The display of maps in the map mode is similar to the route display in a conventional navigation system. Furthermore, this map mode is used by the driver in a stopped state at the time of starting, and there is no effect on the driving operation even if detailed maps are displayed.

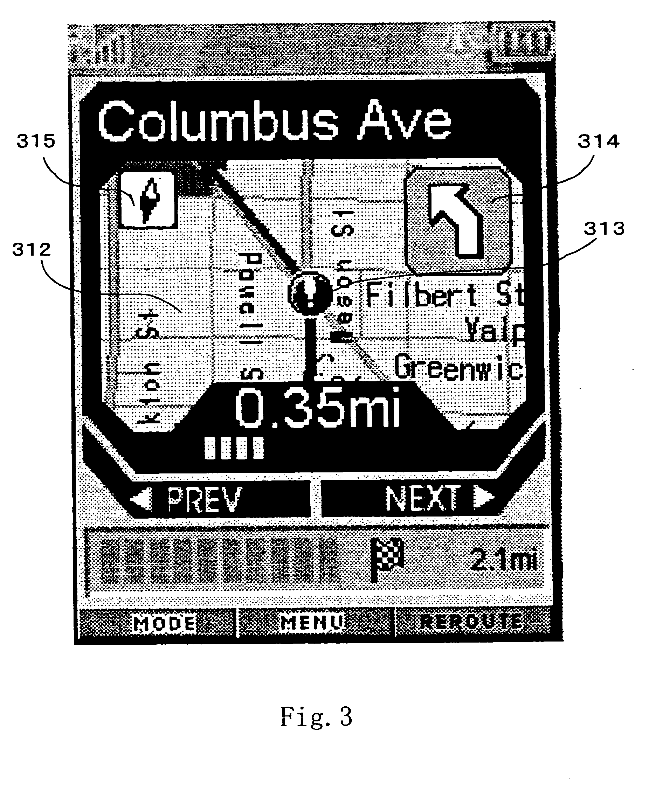

For example, the navigator mode is an operating mode which is used in cases in which the passenger in the front passenger seat provides route guidance to the driver as a navigator. As is shown in FIG. 3, the display screen displays a relatively narrow-range map 312 which includes a guidance point 313 such as an intersection, branching point, or the like on the route; a guidance image 314 which provides guidance at the guidance point 313; and a geographic direction image 315. The navigator can identify the map and the guidance point displayed on the display screen, and the guidance relating to the guidance point (straight ahead, left or right turn), and can transmit this to the driver. As in the map mode, the display of maps in this navigator mode is also similar to the route display in a conventional navigation system.

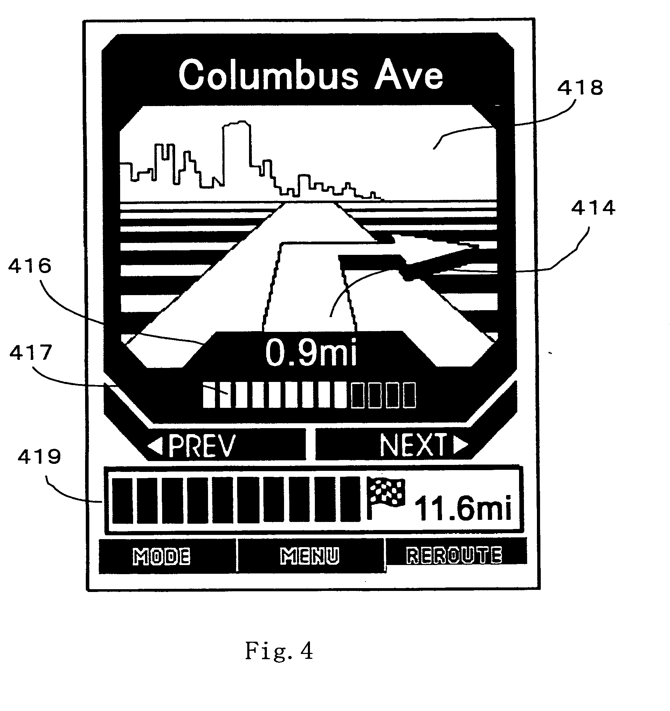

The driving mode is an operating mode in which the display method of the present invention is used. This operating mode performs a display so that the driver can instantaneously identify guidance points and the guidance at these guidance points by a single glance at the display screen while driving. Accordingly, in the display performed in the driving mode, as is shown in FIG. 4, a large arrow image which provides guidance at the guidance points is displayed as a guidance image 414, without any display of map information. The distance from the current position to the guidance point is displayed by a character display 416, a bar display 417, and a total traveling distance bar display 419. Accordingly, in the operating state of the driving mode, the portable terminal 30 does not need to send a map transmission request for requesting new map data to the navigation server, even if the map data is insufficient.

The image occupying the largest display area in the screen layout of the display screen is the background image 418, and is an image that does not require close attention from the driver. The main special feature of the present invention is that the system is configured so that the display color of this background image 418 is varied in accordance with the distance from the current position to the guidance point. The background image 418 does not show maps or roads, but can be formed as an image of the road that resembles a three-dimensional image. A glance at the display image provides the driver with a sensation of traveling over the road. Furthermore, the color of the background image 418 which forms the largest image on the screen is varied in accordance with the distance from the current position to the guidance point.

For example, the background image 418 is displayed in green when the distance to the guidance point is sufficiently large, the background image 418 is displayed in yellow when a certain distance range is reached, and the background image 418 is displayed in red when the guidance point is approached. With such a display, the driver can glance at the screen and instantaneously interpret that the guidance provided indicates that the guidance point is being approached. Thus, when the guidance point is approached, the color of the broadest area of the display screen of the portable terminal changes; accordingly, the change in color can be noted by the indirect visual field as well, and the degree of approach to the guidance point can be ascertained. Even more effective guidance can be obtained by combining this with audio guidance. Since no maps are displayed, there is no diversion of the driver's attention, and no interference with driving.

Accordingly, in the present invention, in cases in which the portable terminal 30 is operating in the driving mode, there is essentially no need for map data, and route guidance is displayed only by means of position information about guidance points such as intersections, branching points, and the like, as well as guidance information relating to the guidance points, e.g., information used to guide the direction of travel of the user on the route, such as straight ahead, left or right turn, and the like. Similar to a conventional navigation terminal apparatus, the portable terminal 30 comprises current position detection means such as GPS receiving means or autonomous navigation means in order to recognize distance relationships between the current position and the positions of guidance points, and is configured so that the approach to guidance points is detected, and guidance information relating to these guidance points is output.

Specifically, in the driving mode, no maps are displayed when the portable terminal 30 displays guidance route data. In other words, the portable terminal 30 differs greatly from a conventional navigation system in that guidance points for setting the locations of intersections and branching points, and guidance information for indicating the direction of travel (straight ahead, left or right turn) at the guidance points is formed by the terminal apparatus from the guidance route data that is received from the navigation server 20, and a simple display method that displays only guidance information at the guidance points is used in the portable terminal 30. Furthermore, as was described above, the system is configured so that when these displays are performed, the display color of the image that occupies the largest area in the screen layout of the display screen is varied in accordance with the distance from the current position to the guidance point, thus allowing the driver (user) to recognize the meaning of the guidance by glancing at the display screen. The system is devised so that the driver can instantaneously recognize the distance to the guidance point by means of the displayed color, merely by glancing at the guidance image.

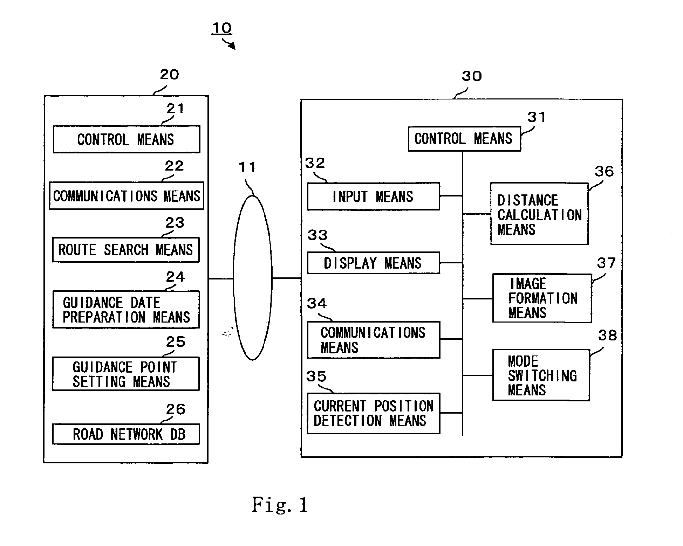

Below, the structure used to realize this characteristic display will be described in detail with reference to FIG. 1. The navigation server 20 comprises control means 21, communications means 22, route search means 23, guidance data preparation means 24, guidance point setting means 25, and a road network DB (data base) 26. The control means 21 is a microprocessor which has a RAM, ROM and processor (not shown). The operations of various parts are controlled by a control program stored in the ROM. The communications means 22 is an interface which communicates with the portable terminal 30 via a network 11.

The route search means 23 references the road network DB 26 and searches for the optimal route from the starting point to the destination on the basis of route search conditions sent from the portable terminal 30. This route search uses a method such as the Dykstra method or the like mentioned above. The guidance route data searched by the route search means 23 is sent to the guidance data preparation means 24 and the guidance point setting means 25; the guidance point setting means 25 sets intersections and branching points in the guidance route as guidance points, and sends the position information to the guidance data preparation means 24; and the guidance data preparation means 24 prepares respective guidance points, guidance (straight ahead, left or right turn) relating to these guidance points, and map data as guidance route data in a specified range that includes the current position, and transmits this data via the communications means 22 to the portable terminal 30 that has requested a route search.

The portable terminal 30 comprises control means 31, input means 32, display means 33, communications means 34, current position detection means 35, distance calculation means 36, image formation means 37, and mode switching means 38. The control means 31 is a microprocessor which has a RAM, ROM, and processor (not shown), and controls the operations of various parts with the aid of a control program stored in the ROM. The input means 32 is an input means comprising numeric or alphabetic keys or other function keys, selection keys, or the like; a desired menu is selected from a menu screen displayed by the display means 33; or route search conditions are input by operating numeric or alphabetic keys. The communications means 34 is an interface which is used to communicate with the navigation server 20 via a network 11.

The route search conditions input by the portable terminal 30 are sent to the navigation server 20, and the navigation server 20 searches for the optimal route on the basis of these route search conditions. As was described above, the guidance route data searched by the navigation server 20 comprises respective guidance points on the guidance route, guidance information relating to these guidance points, and map data. This data is sent to the portable terminal 30. When the portable terminal 30 receives the guidance route data, the terminal apparatus displays the first guidance point in the guidance route data and guidance information for this guidance point on the display means 33 on the basis of the current position of the portable terminal 30 detected by the current position detection means. The mode switching means 38 switches to one of the three operating modes described above in accordance with the operating mode instruction input from the input means 32.

For example, the current position detection means may be a GPS. In cases in which the portable terminal 30 is a portable telephone, it is possible to use a system such as an MS-based scheme or other scheme specifically designed for portable telephones. In cases in which the system is mounted in a vehicle, a vehicle speed pulse signal may also be acquired in addition to the power supply. In this case, an autonomous navigation method may also be used for the distance. Furthermore, the current position can be detected by autonomous navigation if an acceleration sensor or the like is used.

As was mentioned earlier, guidance points are also included in the guidance route data. These guidance points are intersections or branching points, and are locations where the direction of travel of the vehicle is to be changed. Since the guidance points are set as nodes, the direction of change of the travel path, i.e., the guidance at the guidance points (arrow 414 in FIG. 4), is expressed by the angle that is formed by the entering link and the exiting link. For example, such changes are classified at 45-degree increments into five directions, i.e., left, diagonally to the left, straight ahead, diagonally to the right, and right, and are expressed as large arrow images (guidance 414) on the display screen, as shown in FIG. 4. It would appear at first glance that there is no need to display the direction of straight ahead, but even in the case of travel straight ahead, such a display is used to indicate road classifications, e.g., cases where there is a change from a general road to a freeway.

The distance from the current position to the next guidance point is calculated by the distance calculation means 36. The distance obtained by adding the length of the link to the previous guidance point to the distance from the current position to the next node on the route (this may be calculated in approximate terms by the rectilinear distance from the latitude and longitude of the node) is the distance from the current position to the next guidance point. In cases in which this distance is equal to or less than a specified first value, image data in which the color of the background image 418 (see FIG. 4) is set as a specified color is prepared when the image formation means 37 prepares the image data that is displayed by the display means 33. As was described above, the image of the guidance 414 (see FIG. 4) is an arrow image, and the background image 418 is not a map, but a fixed background that evokes the same sensation of distance or degree of approach as the arrow, and this requires no particular diversion of attention. The display color of this portion is changed from green to yellow. Furthermore, in cases in which the remaining distance is equal to or less than a specified second value, the color is changed from yellow to red.

The switching of the operating mode to this driving mode does not depend on input instructions from the input means 32, but is automatically selected when the portable terminal 30 is mounted in a hands-free kit installed in the vehicle. Alternatively, the mounting in a holder may be mechanically read, or a structure may be used in which the mode switching means 38 automatically switches to the operation of the driving mode with the supply of power or the input of a signal, such as a vehicle speed pulse or the like, as a condition. Especially in cases in which a portable telephone is used as the portable terminal 30, the automatic switching of the operating mode described below may be used besides the switching described above.

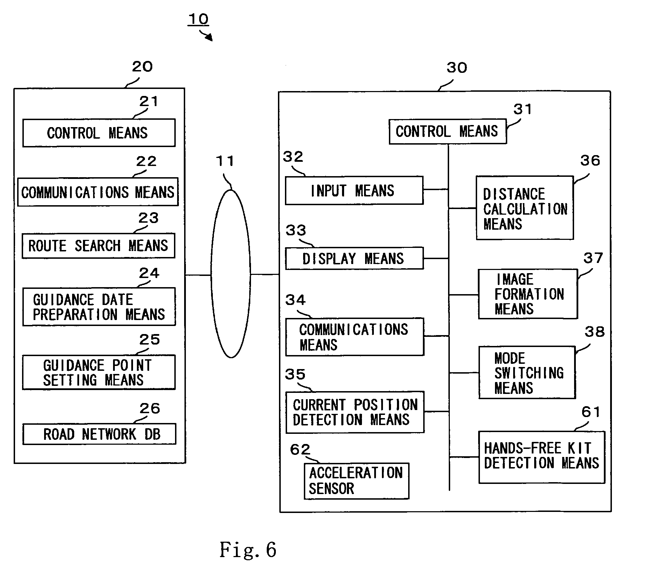

For example, as is shown in FIG. 6, hands-free kit detection means 61 and a triaxial acceleration sensor 62 are disposed in a portable telephone constituting the portable terminal 30. It can be determined that the vehicle is in motion, and the display can be switched to the display of the driving mode in cases in which the direction in which the largest acceleration is detected by the acceleration sensor 62 is excluded as the direction of gravitational acceleration (vertical), and a variation in acceleration is observed on the remaining two axes. The ordinary acceleration of a passenger vehicle is generally about 0.1 G to 0.4 G. In cases in which there is a left or right turn at an intersection, a variation in acceleration of about 0.4 G is detected. In the case of a braking operation, a maximum variation in acceleration of about 0.8 G is observed. Accordingly, the fact that the portable telephone is set in a hands-free kit is detected by the hands-free kit detection means, and in cases in which the acceleration varies within the dynamic range of the acceleration sensor 62, it is determined that the vehicle is in motion.

Furthermore, even in cases in which a hands-free kit is not used, the system may be devised so that the system switches to the operation of the driving mode if a specified time has elapsed without operation of the portable telephone constituting the portable terminal 30 from the initiation of route guidance. If the portable telephone is operated, this operation is performed by the front seat passenger, and the mode may therefore be automatically switched to the operating mode of a map display based on the map mode or navigator mode.

In cases in which the driver uses a portable telephone as the portable terminal 30, this portable telephone is fastened to a hands-free kit or the like; accordingly, the display screen is fixed at an angle that is close to vertical. In cases in which the front seat passenger uses the portable telephone, the portable telephone is used in a relatively horizontal state; accordingly, there is a difference in angle between the ways in which the telephone is used in these two states. An orientation detection means can be installed in the portable telephone. In cases in which the orientation of the portable telephone is close to vertical, the mode can be set as the operating mode of the driving mode, and in cases in which the orientation of the portable telephone is close to horizontal, the mode can be automatically switched to the operating mode of the navigator mode or map mode equipped with maps.

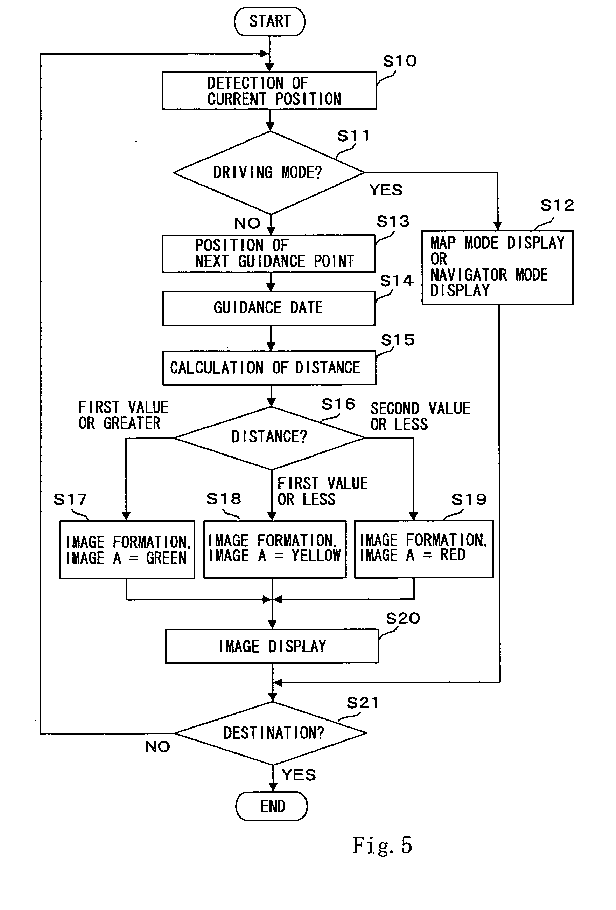

FIG. 5 is a flowchart showing the above-described operating procedure in a navigation system 10 constituting an embodiment of the present invention. Furthermore, the flowchart in FIG. 5 shows the operation after the operating mode of the portable terminal 30 has been set by one of the methods described above, and the route search conditions such as the starting point, destination, and the like have been sent to the navigation server 20. Specifically, this is an operating flowchart of the portable terminal 30 in a state in which a search has been made by the navigation server 20 for an optimal route in accordance with the route search conditions, and guidance route data has been transmitted to the portable terminal 30.

First, in the portable terminal 30, the current position detection means 35 detects the current position at regular intervals in the processing of step S10. In the processing of step S11, the control means 31 determines that the operating mode of the portable terminal 30 is the driving mode. If the operating mode of the portable terminal 30 is not the driving mode, the display of the map mode or the display of the navigator mode is performed by the display means 33 in the processing of step S12. If the operating mode of the portable terminal 30 is the driving mode, the image formation means 37 acquires the position (latitude and longitude) of the next guidance point in the processing of step S13 on the basis of the guidance route data received from the navigation server 20, and subsequently acquires guidance information (travel path guidance for a straight-ahead travel or a left or right turn) at this guidance point in the processing of step S14.

Meanwhile, in the processing of step S15, the distance calculation means 36 calculates the distance from the current position to the next guidance point on the basis of the current position detected in step S10 and the position of the next guidance point obtained by the image formation means 37. As was described above, this calculation is performed by adding the length of the link to the previous guidance point to the distance from the current position to the next node on the route (this may be calculated in approximate terms by the rectilinear distance from the latitude and longitude of the node). Then, in the processing of step S16, the distance calculation means 36 determines whether the distance to the next guidance point calculated in step S15 is equal to or less than a first value, or equal to or less than a second value, and the results are sent to the image formation means 37.

The image formation means 37 receives the determination results from the distance calculation means 36, and in cases in which the distance is equal to or greater than the first value, the image formation means 37 prepares the image data displayed by the display means 33 in the processing of step S17. In this case, the color of the portion constituting the background image is set as green. This display image is sent to the display means 33 and is displayed by the display means 33 in the processing of step S20. The display image is the image shown in FIG. 4; the background image 418 is displayed with a green color.

In cases in which the distance is equal to or less than the first value, the image formation means 37 prepares the image data displayed by the display means 33 in the processing of step S18. In this case, the color of the portion constituting the background image is set as yellow. This display image is sent to the display means 33 and is displayed by the display means 33 in the processing of step S20. The display image is the image shown in FIG. 4; the background image 418 is displayed with a yellow color.

In cases in which the distance is equal to or less than the second value, the image formation means 37 prepares the image data displayed by the display means 33 in the processing of step S19. In this case, the color of the portion constituting the background image is set as red. This display image is sent to the display means 33 and is displayed by the display means 33 in the processing of step S20. The display image is the image shown in FIG. 4; the background image 418 is displayed with a red color.

Then, in step S1, the control means 31 determines whether or not the destination has been reached. If the destination has been reached, the processing is ended; if the destination has not been reached, the processing returns to step S10, and the processing described above is repeated.

Specifically, in the guidance image displayed by the display means 33, the color of the background image which constitutes the broadest portion of the display image changes from green to yellow, and then to red, in accordance with the distance to the next guidance point as this guidance point draws nearer. The driver can instantaneously ascertain the proximity of the guidance point merely by glancing at the color of the background image 418 displayed on the display screen, and can instantaneously understand the meaning of the guidance. Furthermore, the guidance image is displayed as a large arrow, so that the driver can instantaneously determine the direction of travel to the next guidance point.

### INDUSTRIAL APPLICABILITY

In the navigation system of the present invention, as was described above in detail, a display image of the guidance route is displayed in a driving mode so that the color of the background image which constitutes the broadest portion of the display image changes from green to yellow, and then to red, in accordance with the distance to the next guidance point as this guidance point draws nearer. As a result, the driver can instantaneously ascertain the proximity of the guidance point merely by glancing at the display screen, and can instantaneously understand the meaning of the guidance information. Furthermore, the guidance information is indicated by a large arrow, so that the driver can instantaneously determine the direction of travel to the next guidance point.

Accordingly, a navigation system that is highly safe for the user can be provided, and in particular, a navigation system that is suitable for use in a communications navigation system that uses a portable telephone as the portable terminal 30 can be provided.

### BRIEF DESCRIPTION OF THE DRAWINGS

FIG. 1 is a block diagram showing the structure of a navigation system constituting an embodiment of the present invention;
FIG. 2 is a screen layout diagram showing the layout of the display screen in the map mode;
FIG. 3 is a screen layout diagram showing the layout of the display screen in the navigator mode;
FIG. 4 is a screen layout diagram showing the layout of the display screen in the driving mode in which the display method of the present invention is used;
FIG. 5 is a flowchart showing the operating procedure of a navigation system constituting an embodiment of the present invention;
FIG. 6 is a block diagram showing the structure of a navigation system constituting another embodiment of the present invention;
FIG. 7 is a model diagram used to illustrate the structure of a road network used for general route searching; and
FIG. 8 is a diagram showing one example of the display screen in a conventional navigation system.

### [Key to Symbols]

- 10: Navigation system
- 20: Navigation server
- 21: Control means
- 22: Communications means
- 23: Route search means
- 24: Guidance data preparation means
- 25: Guidance point setting means
- 26: Road network DB
- 30: Portable terminal
- 31: Control means
- 32: Input means
- 33: Display means
- 34: Communications means
- 35: Current position detection means
- 36: Distance calculation mans
- 37: Image formation means
- 38: Mode switching means
- 211, 311: Current position
- 212, 312: Map
- 213, 313: Guidance points
- 214, 314: Guidance image
- 215, 315: Geographic direction image
- 414: Guidance
- 417: Bar display (distance to guidance point)
- 418: Background image
- 419: Bar display (total traveling distance)

## Claims

1. A navigation system in which a navigation server searches for a route from a starting point to a destination on the basis of route search conditions input from a portable terminal, a guidance route is sent to the portable terminal, and the portable terminal displays the guidance route on display means, wherein
the navigation server comprises guidance data preparation means for preparing, based on the guidance route identified by the search, guidance route data including guidance points on the guidance route and guidance information relating to these guidance points,
the portable terminal can operate at least in a driving mode and has current position detection means, distance calculation means, image formation means, and display means,
the portable terminal, when operating in the driving mode, is devised so that
the distance calculation means calculates the distance from the current position to the next guidance point on the basis of the current position detected by the current position detection means and guidance route data sent from the navigation server,
the image formation means prepares a background image and a guidance image displayed by the display means on the basis of the guidance route data sent from the navigation server, and prepares an image in which the display colors of the background image are made into respectively different display colors in accordance with the distance calculated by the distance calculation means, and
the display means displays the images prepared by the image formation means.

2. The navigation system according to claim 1, wherein the portable terminal has another operating mode for displaying maps together with guidance route data, and is provided with mode switching means.

3. The navigation system according to claim 2, wherein the mode switching means detects that the portable terminal is mounted on a hands-free kit, and switches to the driving mode.

4. The navigation system according to claim 3, wherein
the portable terminal further comprises an acceleration sensor; and
the switching means switches to the driving mode in cases in which the portable terminal is mounted on a hands-free kit and there is a variation equal to or greater than a specified value in the acceleration that acts on the portable terminal.

5. The navigation system according to claim 2, wherein the mode switching means switches to the driving mode in cases in which the portable terminal is out of operation for a specified period of time or longer.

6. The navigation system according to claim 2, wherein
the portable terminal further comprises an inclination sensor; and
the switching means switches to the driving mode in cases in which the display screen of the portable terminal is inclined in a substantially vertical direction.

7. A portable terminal constituting a navigation system in which a navigation server searches for a route from a starting point to a destination on the basis of route search conditions input from a portable terminal; guidance route data including a guidance route, guidance points on the guidance route, and guidance information relating to these guidance points is sent to the portable terminal; and the portable terminal displays the guidance route on a display means, wherein
the portable terminal can operate at least in a driving mode and has current position detection means, distance calculation means, image formation means, and display means,
the portable terminal, when operating in the driving mode, is devised so that
the distance calculation means calculates the distance from the current position to the next guidance point on the basis of the current position detected by the current position detection means and on the basis of the guidance route data sent from the navigation server,
the image formation means prepares a background image and a guidance image displayed by the display means on the basis of the guidance route data sent from the navigation server, and prepares an image in which the display colors of the background image are made into respectively different display colors in accordance with the distance calculated by the distance calculation means, and
the display means displays the images prepared by the image formation means.

8. The portable terminal according to claim 7, wherein the portable terminal has another operating mode for displaying maps together with guidance route data, and is provided with mode switching means.

9. The portable terminal of the invention of claim 8, wherein the mode switching means detects that the portable terminal is mounted on a hands-free kit, and switches to the driving mode.

10. The portable terminal according to claim 9, wherein
the portable terminal further comprises an acceleration sensor; and
the switching means switches to the driving mode in cases in which the portable terminal is mounted on a hands-free kit and there is a variation equal to or greater than a specified value in the acceleration that acts on the portable terminal.

11. The portable terminal according to claim 8, wherein the mode switching means switches to the driving mode in cases in which the portable terminal is out of operation for a specified period of time or longer.

12. The portable terminal according to claim 8, wherein
the portable terminal further comprises an inclination sensor; and
the switching means switches to the driving mode in cases in which the display screen of the portable terminal is inclined in a substantially vertical direction.
